# EUROPÄISCHE PATENTSCHRIFT

(11) **EP 0 546 218 B1**
(45) Veröffentlichungstag und Bekanntmachung des Hinweises auf die Patenterteilung: **22.06.1994**
(21) Anmeldenummer: 91121411.2
(22) Anmeldetag: 13.12.1991
(51) Int. Cl.: F16D 59/02

(54) **Elektro-magnetische Bremse mit einer Bremsspule**
Electromagnetic brake with a brake coil
Frein électromagnétique avec une bobine de frein

(43) Veröffentlichungstag der Anmeldung: 16.06.1993
(73) Patentinhaber: ABUS Kransysteme GmbH & Co. KG., 51647 Gummersbach (DE)
(72) Erfinder: Bube, Eckhard, Dipl.-Ing., W-5270 Gummersbach (DE); Bühne, Werner, Dipl.-Ing., W-5270 Gummersbach (DE)
(74) Vertreter: Dörner, Lothar, Dipl.-Ing.

(56) Entgegenhaltungen:
- EP-A- 0 446 904

## Beschreibung

### Technisches Gebiet:

Die Erfindung betrifft eine elektro-magnetische Bremse mit einer Bremsspule für einen Fahr- und/oder Hubantrieb eines Kransystems.

### Stand der Technik:

In modernen Kransystemen werden für den Fahr- und Hubantrieb Elektromotoren verschiedenster Bauart eingesetzt. Diese Motoren sind zumeist mit einer elektro-magnetischen Bremse ausgerüstet. Zum Betrieb der elektro-magnetischen Bremse wird eine Versorgungsspannung benötigt. Die Versorgungsspannung wird aus dem auch den Elektromotor speisenden Netz entnommen. Speisende Netze unterschiedlicher Spannung und Frequenz erfordern eine Vielzahl von Motor- und Bremskombinationen, sofern nicht ein gesondertes Stellglied zur Spannungsanpassung eingesetzt wird.

### Darstellung der Erfindung:

Hier will die Erfindung Abhilfe schaffen. Der Erfindung liegt die Aufgabe zugrunde, die Vielzahl der bisher erforderlichen Bremsen auf eine einzige Bremse zu reduzieren, die in einem weiten Spannungs- und Frequenzbereich arbeiten soll. Gemäß der Erfindung wird diese Aufgabe dadurch gelöst, daß die Bremsspule eine Mehrzahl von Zwischenabgriffen aufweist, die wahlweise an eine Versorgungsleitung in Abhängigkeit von deren Spannung und Frequenz anschließbar sind.

Die elektro-magnetische Bremse nach der Erfindung weist an der Bremsspule eine bestimmte, vorher festgelegte Anzahl von Zwischenabgriffen auf. Abhängig davon, welche Spannung und/oder Frequenz die Versorgungsleitung aufweist, aus der der Fahr- und/oder Hubantrieb des Kransystems und damit auch die Bremsspule gespeist werden, wird einer der Zwischenabgriffe an die Versorgungsleitung gelegt. Es bedarf also nur noch der Verwendung einer bestimmten Bremsspule, deren Spulensegmente über die Zwischenabgriffe angepaßt an Versorgungsleitungen üblicher Spannung und Frequenz ausgelegt sind. Die Verwendung unterschiedlicher Bremsspulen für unterschiedliche Spannungen und Frequenzen entfällt. Vielmehr kann die elektro-magnetische Bremse in einem weiten Spannungs- und Frenquenzbereich arbeiten.

In Weiterbildung der Erfindung sind über die Zwischenabgriffe die Spulensegmente der Spule parallel und/oder in Reihe zueinander schaltbar. Neben der Benutzung eines bestimmten Zwischenabgriffs angepaßt an die Spannung und die Frequenz der Versorgungsleitung ist durch diese Ausgestaltung eine weitere Variation gegeben: Die Parallel- und Reihenschaltung ermöglicht, innerhalb des Anschlusses an bestimmte Zwischenabgriffe ein und dieselbe Spule an verschiedensten Spannungen und Frequenzen zu betreiben.

### Kurze Beschreibung der Zeichnung:

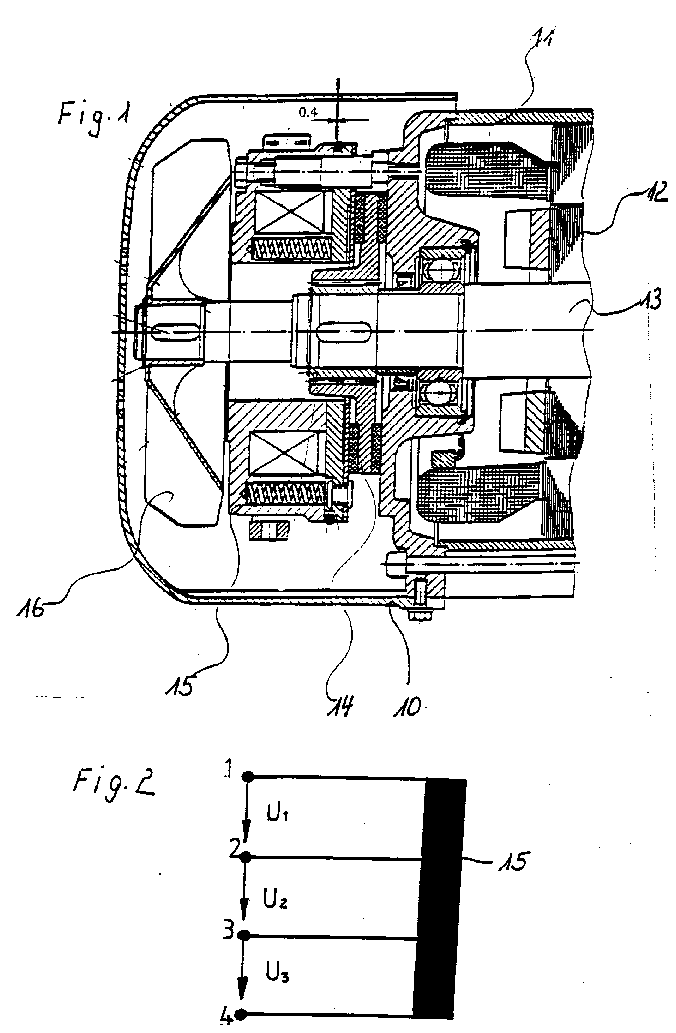

Ein Ausführungsbeispiel der Erfindung ist in der Zeichnung dargestellt und wird nachfolgend im einzelnen beschrieben. Es zeigen
- Fig. 1: einen Teil-Axialschnitt durch einen Elektromotor;
- Fig. 2: das Schaltschema einer Spule einer elektromagnetischen Bremse.

### Bester Weg zur Ausführung der Erfindung:

Ein als Fahr- oder Hubantrieb in einem Kransystem vorgesehener Elektromotor weist ein Gehäuse 10 auf. Mit dem Gehäuse 10 ist ein Stator 11 verbunden. In dem Gehäuse 10 ist eine Motorwelle 13 drehbar gelagert. Mit der Motorwelle 13 drehbar sind ein Rotor 12, ein Lüfter 16 und ein Bremsbelagträger 14. Eine dem Bremsbelagträger 14 zugeordnete Bremsspule 15 ist mit dem Gehäuse 10 verbunden.

Die Bremsspule 15 weist Zwischenabgriffe 1 bis 4 auf. Die Zwischenabgriffe 1 bis 4 sind wahlweise an eine Versorgungsleitung in Abhängigkeit von deren Spannung und/oder Frequenz anschließbar. Über die Zwischenabgriffe 1 bis 4 sind Spulensegmente der Bremsspule 15 parallel und/oder in Reihe zueinander schaltbar.

Ordnet man im Ausführungsbeispiel jeweils benachbarten Abgriffen 1 und 2, 2 und 3 sowie 3 und 4 die gleiche Spannung U₁ = U₂ = U₃ = 100 V zu, kann durch Reihen- und/oder Parallelschaltung zugeordneter Spulensegmente der Bremsspule 15 die Spannung zwischen 33 V - alle drei Spulen liegen parallel - bis 300 V - alle drei Spulen sind in Reihe geschaltet - variiert werden.

### Gewerbliche Verwertbarkeit:

Die Erfindung ist verwendbar für Fahr- und/oder Hubantriebe eines Kransystems.

## Patentansprüche

1. Elektro-magnetische Bremse mit einer Bremsspule (15) für einen Fahr- und/oder Hubantrieb eines Kransystems, dadurch gekennzeichnet, daß die Bremsspule (15) eine Mehrzahl von Zwischenabgriffen (1 bis 4) aufweist, die wahlweise an eine Versorgungsleitung in Abhängigkeit von deren Spannung und/oder Frequenz anschließbar sind.

2. Elektro-magnetische Bremse nach Anspruch 1, dadurch gekennzeichnet, daß über die Zwischenabgriffe (1 bis 4) Spulensegmente der Bremsspule (15) parallel und/oder in Reihe zueinander schaltbar sind.

## Claims

1. Electromagnetic brake with a brake coil (15) for a travelling and/or hoisting drive of a crane system, characterized in that the brake coil (15) has a plurality of dividers (1 to 4), which selectively are connectable to a power supply in dependance upon its voltage and/or frequency.

2. Electromagnetic brake according to claim 1, characterized in that coil segments of the brake coil (15) are switchable parallel and/or in series to each other by means of the dividers (1 to 4).

## Revendications

1. Frein électromagnétique avec une bobine de frein (15) pour une commande de translation et/ou de levage d'un système de grue, **caractérisé** **en ce** que la bobine de frein (15) comprend une pluralité de prises intermédiaires (1 à 4) qui peuvent être reliées, au choix, à une ligne d'alimentation en fonction de la tension et/ou de la fréquence de celle-ci.

2. Frein électromagnétique selon la revendication 1, caractérisé en ce que des segments de la bobine de frein (15) peuvent être montés les uns par rapport aux autres en parallèle et/ou en série par l'intermédiaire des prises intermédiaires (1 à 4).
